# EUROPEAN PATENT APPLICATION

(11) **EP 4 151 449 A1**
(43) Date of publication of application: **22.03.2023**
(21) Application number: 21198015.6
(22) Date of filing: 21.09.2021
(51) Int. Cl.: B60L 53/14, H01R 13/00

(54) **LIQUID-COOLED CHARGING CONNECTOR**

(71) Applicant: ABB E-mobility B.V., 2629 JG Delft (NL)
(72) Inventor: LA ROSA, Cristoforo, 52025 Montevarchi (IT); ZOON, Wiebe, 2623 Delft (NL); KOOLEN, Gertjan, 5622 CV Eindhoven (NL); ATAEI DADAVI, Iman, 2592 SV The Hague (NL); BARCHETTA, Alessandro, 52027 San Giovanni Valdarno (AR) (IT); ZOTTAREL, Andrea, 30027 San Donà di Piave (IT)
(74) Representative: Maiwald GmbH

(57) **Abstract**

The invention relates to an electric vehicle charging system (100) comprising an EV charger (110) that comprises a current control unit (114), a charge connector (130), a charge cable (120) connecting the EV charger (110) with the charge connector (130), a cooling circuit, and a plurality of temperature sensors (T1 ...T6) attached to the cooling circuit at different positions and providing measured temperatures to the control unit (114). The control unit (114) is configured to control charge current in dependence on temperature differences measured between temperature sensors (T1...T6) of the plurality of temperature sensors (T1...T6).

## Description

### Technical Field

The invention relates to an electric vehicle charging system, a method for controlling the charging of an electric vehicle in an electric vehicle charging system, a control unit for an electric vehicle charging system, and a use of temperature sensors in an electric vehicle charging system for controlling charge current.

### Background

Heat generation on charging plugs is a key issue for charging plugs. In addition to dissipating heat, it is important to provide protective devices for the charging plug and for the user to prevent damage and injury. One common device to remove heat is active liquid cooling, where liquid-filled tubes are routed along the cables and into the plug. It is common that the temperature of the cooling liquid in the cable is controlled in a control loop, and modulated by changing the current through the charge cable, which is also known as derating. For optimal performance, the typical liquid temperature in the cable is close to the maximum allowed temperature, which is limited by the properties of the charge cable. For controlling the charging current, the temperature at the most critical positons may be watched. However, the temperature measurements are usually too slow to be able to use as safety mechanism

### Summary of the invention

A mechanism or arrangement may be desired that improves the protection against over-temperature.

The problem is solved by the subject-matter of the independent claims. Embodiments are provided by the dependent claims, the following description and the accompanying figures.

The described embodiments similarly pertain to the electric vehicle charging system, the method for controlling the charging of an electric vehicle in an electric vehicle charging system, the control unit for an electric vehicle charging system, and the use of temperature sensors in an electric vehicle charging system for controlling charge current. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, an electric vehicle (EV) charging system is provided. The system comprises an EV charger comprising a current control unit, a charge connector, a charge cable connecting the EV charger with the charge connector, a cooling circuit, and a plurality of temperature sensors attached to the cooling circuit at different positions and providing measured temperatures to the control unit. The control unit is configured to control charge current in dependence on temperature differences measured between temperature sensors of the plurality of temperature sensors.

The EV charger is the station that is connected to the mains network and that provides the charge current through the charge cable and the charge connector to an electric vehicle whose battery shall be charged. The EV charger comprises a control unit that controls the amount of energy or electrical current that is delivered to the vehicle. The amount effects the temperature especially of the charge connector due to the transition at the mechanical connection to the vehicle. That is, the charge connector is the heat source. The charge connector is cooled by a cooling circuit that may be a tube running next to the wire from the EV charger to the charge connector that may be filled with liquid. The temperature of this tube is measured at different positions. The current control unit receives the temperatures values as input data, calculates differences between the received values of the different temperatures and controls the current to be delivered to the vehicle in dependence on these values. The difference indicates, for example, if the cooling circuit has a failure or whether to much energy is delivered to the vehicle at the moment.

According to an embodiment, the control unit of the electric vehicle charging system is configured to control the charge current additionally in dependence on the absolute temperature measured by temperature sensors of the plurality of temperature sensors.

In some cases, the temperature taken alone may not be sufficient to conclude whether the current has to be reduced or not. E.g., the absolute temperature at the cooling tube at the charge connector may have to be taken into account. For example, the temperature may indicate that the temperature at the charge connector accumulates, which may be a first criterion to reduce the current. However, if the absolute temperature is still well below a maximum allowed temperature, the current may not be reduced or only slightly reduced.

According to an embodiment, the cooling circuit is an active closed cooling circuit with a cold cooling tube from the EV charger through the charge cable to the charge connector and a hot cooling tube from the charge connector through the charge cable to the EV charger. The hot and the cold cooling tubes are filled with a cooling liquid, and the temperature sensors are configured to measure the temperature of the cooling liquid or the temperature at the cold and hot, respectively, cooling tubes, at the different parts of the charging system.

The term "active" indicates that the cooling liquid is actively pumped through the tubes such that cool liquid from the pump flows in the cold cooling tube to the charging connector where it is heated and flows back through the hot cooling tube to the pump. The term "closed circuit" means that the liquid remains in the tubes in a loop from the pump in the station to the connector and back to the pump.

According to an embodiment, the EV charger further comprises a cooling unit with a pump configured to drive the fluid through the fluid tubes and to cool incoming hot fluid and pump the cooled fluid into the cold cooling tube to the charge connector. The control unit is configured to determine a temperature difference between a temperature measured at the cold cooling tube at the charge connector and the cold side of the cooling unit; and/or a temperature difference between a temperature measured at the hot cooling tube at the charge connector and the hot side of the cooling unit; and/or a temperature difference between a temperature measured at the hot cooling tube at the charge cable and the hot side of the cooling unit; and/or a temperature difference between a temperature measured at the hot side of the cooling unit and the cold side of the cooling unit.

These arrangements are suitable to detect the following scenarii.

A failing cooler unit having issues for example with its pump, fan or liquid levels can be detected by the temperature difference between T5 and T6. If the pump throughput is low or zero, the temperature difference rises because the liquid is still cooled by the fan. If the fan does not work properly or if the pump throughput is too high, the temperature difference rises falls.

A blockage of single tube can be detected by the temperature difference between for example T2 and T6 or between T3 and T5. In this case, the temperature on the charge connector side gets significantly higher than on the EV charger side. The same applies for a blockage of both tubes by the temperature difference between for example T2 and T6 and between T3 and T5.

Further, a wrong type of cable can be detected. For example, if the cable is under-dimensioned, the temperature on charger side will get significantly higher than on the cool side of the pump outlet.

Furthermore, a reverse connection of the tubing by the sign of the temperature differences between T2 and T6 or between T3 and T5 can be detected. Since in this case, hot and cold are swapped, the signs change.

Therefore, according to an embodiment, the control unit is further configured to determine whether the cooling tube and/or the cooling unit has a defect.

According to an embodiment, the control unit provides an interface to communicate that the cooling tube and/or the cooling unit have a defect, if it has determined that they have a defect.

That is, the control unit may indicate a failure and the reason for the failure by an optical or acoustic sign, e.g. an LED, a display or a tone, or send a message over a data network to the operator of the charging system.

According to an embodiment, the electric vehicle charging system comprises additional cooling circuits, and the control unit is further configured to control the charge current additionally in dependence on temperature differences measured within these cooling circuits and/or temperature differences measured between the cooling circuits.

For example, the cooling circuits should behave in a similar way with respect to the temperature. If this is not the case, there may be a failure. This may be detected by temperature differences between different cooling circuits at corresponding positions.

According to a further aspect, a method for controlling the charging of an electric vehicle in an electric vehicle charging system described herein is provided. The method comprises the following steps performed by the control unit: determining temperature differences measured between temperature sensors of the plurality of temperature sensors, and controlling the charge current in dependence on the determined temperature differences.

According to a further aspect, a control unit for an electric vehicle charging system as described herein is provided.

According to a further aspect, a use of temperature sensors in an electric vehicle charging system as described herein for determining temperature differences measured between temperature sensors of the plurality of temperature sensors and controlling charge current in dependence on the determined temperature differences is provided.

For sake of safety, a protection mechanism is needed that is failsafe in operation to switch off charging if a maximum temperature is reached.

As forsake of reliability, a control mechanism is provided to assure consistent acceptable temperatures in all parts of the charging cable. An additional issue is that the temperature measurements are usually too slow to be able to use as safety mechanism. For sake of safety, a protection mechanism is provided that is failsafe in operation to switch off charging if a maximum temperature is reached.

These and other features, aspects and advantages of the present invention will become better understood with reference to the accompanying figures and the following description.

### Short Description of the Figures

Fig. 1 shows an illustration of a zero pose image and a first image according to an embodiment,
Fig. 2 shows a flow diagram of a method for controlling the charging of an electric vehicle in an electric vehicle charging system,
Fig. 3 shows a temperature diagram in a case without faults,
Fig. 4 shows a temperature diagram in a case where a fan of the cooling unit is disconnected,
Fig. 5 shows a temperature diagram in a case where the pump of the cooling unit is broken or the flow of the cooling fluid is limited.

### Detailed Description of Embodiments

Corresponding parts are provided with the same reference symbols in all figures.

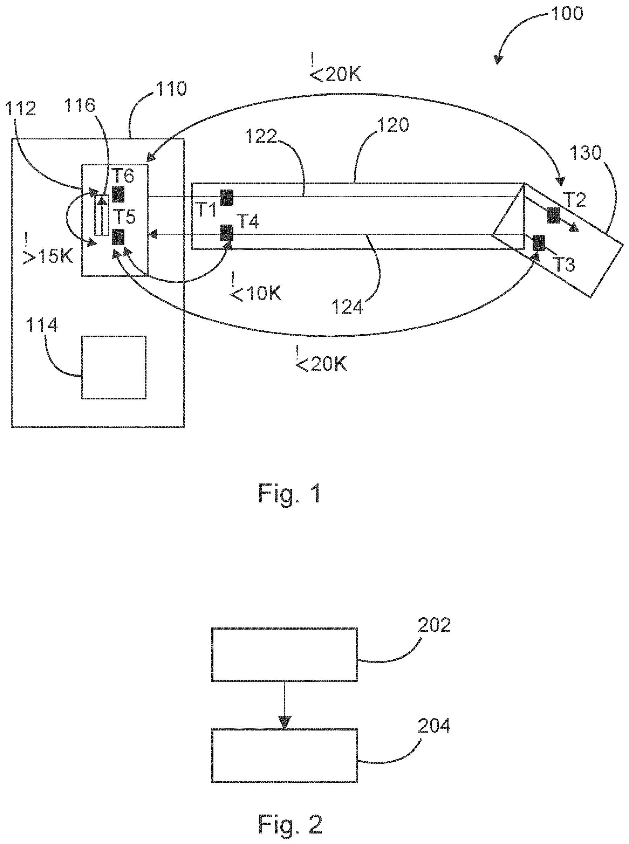

Fig. 1 shows a block diagram of an electric vehicle charging system 100. The system comprises an EV charger 110 with a current control unit 114, a charge connector 120, a charge cable 120 connecting the EV charger 110 and the charge connector 120, and a plurality of temperature sensors T1 ... T6 attached to different parts of the charging system 100. The temperature sensors T1 ... T6 provide measured temperatures to the control unit 114. The control unit is configured to control the charge current in dependence on temperature differences measured between temperature sensors of the plurality of temperature sensors. The electric vehicle charging system 100 further comprises a cooling unit 112. In general, the temperature sensors may measure the temperature at the cooling tubes or the temperature of the fluid itself. The data may be transmitted to the EV charger 110 and to the control unit 114 via data tubes inside the cable 120.

Temperature sensor T6 is attached to the cold part of the cooling unit 112. This may be at the output of the pump 116 that is pumping the cooled fluid through a cooling tube 122, 124.

Temperature sensor T1 is an optional sensor that may be attached to or in the cooling tube at the EV charger side of the charge cable 120, measuring the cooled fluid in or the cold cooling tube coming from the cooling unit 112 of the EV charger 110.

Temperature sensor T2 is mounted on the inside or outside of the cooling tube of the charge connector 130, measuring the cooled fluid or the tube temperature at this position, which is exposed to the heat raising in the connector 130 during charge of a vehicle battery. The control unit receives the measured temperatures of the sensors T2 and T6, and calculates the temperature difference d_T2T6 between T2 and T6. A temperature difference d_T2T6 lower than a threshold, for example, 20 K (Kelvin), may indicate that the cooling tube is intact and that the charge connector 130 is not too hot. The exclamation mark above the "lower than" or "higher than" sign indicates that the difference has to be lower/higher than the given threshold value.

Further, using additionally the absolute temperatures of T6 and T2 indicate, whether the cooling unit 112 is intact and may confirm whether the temperature is acceptable or too high at the charge connector 130 such that the control unit 114 reduces the charge current. The control unit may take the temperature of the environment into account. For example, if the environment temperature is low, the threshold for d_T2T6 may be higher, since the environment also cools the charge connector, which again allows the control unit charging the vehicle battery at a higher charge current.

Temperature sensor T3 is positioned at the hot cooling tube 124 of the cooling tube 122, 124 in the charge connector 130, where the fluid is yet heated by the charge connector 130 and flows back to the EV charger 110. Correspondent to the example with T2, T6, the control unit 112 calculates the temperature difference d_T3T5 between T3 and the temperature determined by a sensor at the hot side of the cooling unit 112. The control unit determines whether the temperature difference d_T3T5 is below a threshold, e.g., 20K. In dependence on the result, the control unit determines whether the tube is intact and whether the temperature at the charge connector 130 is too hot.

A further temperature sensor T3 may be positioned at the EV-charger 110 end of the cable 120 at the hot cooling tube 124. A temperature difference d_T4T5 between T4 and T5 higher than a threshold, e.g. 10 K, indicates a failure of cooling tube 124 or thermal connection to the EV charger 110.

As one difference to absolute temperature measurements, it can be determined whether the temperature accumulates at the charge connector 130. The reason for such an accumulation may be a defect of the cooling tube. In order to detect a failure or overload of the cooling unit 112, the control unit 114 may determine the temperature difference d_T5T6 between sensors T5 and T6. If the difference is lower than a threshold, e.g. 15 K, the cooling unit might be overloaded or defect. For example, the fan might not working fully or the pump 116 is too strong or fast for enabling a sufficient cooling of the fluid.

In any cases where a defect of the cooling tube 122, 124 or non-sufficient cooling is detected, the charge current may be lowered.

It is noted that further criteria may be used to detect a defect of the cooling tube or for controlling the charge current. For example, environmental conditions, a pressure of the fluid or a charging time may be taken into account. Further, Additional temperature sensors may be installed. For example, temperature sensors at both ends of the cable may be implemented to detect a defect of the cooling tubes 122, 124 in the cable 120. By positioning the temperature sensors between critical portions, the critical portion can be monitored. Further, the threshold may be defined for each type or for a combination of charge station, charge cable, and charge connector individually since the temperatures, also allowed temperatures, depend on the diameters of the wires, the cooling tubes, positions of the sensors, and structure of and conditions at these devices.

Fig. 2 shows a flow diagram of a method for controlling the charging of an electric vehicle in an electric vehicle charging system as described in this disclosure, comprising the following steps performed by the control unit 114. In a first step 202, the temperature differences measured between temperature sensors of the plurality of temperature sensors is determined. In a second step 204, the charge current is controlled in dependence on the determined temperature differences.

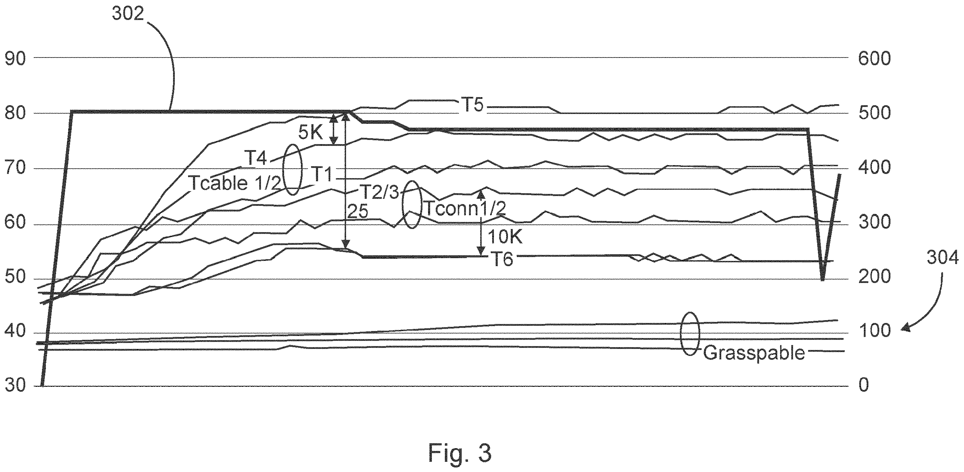

Fig. 3 shows a temperature diagram in a case without faults. The x-axes is time. The shown interval has a range of about 8 minutes. In this example, the control unit 114 reduces the charge current, shown as line 302, when the temperature difference between T5 and T6 exceeds 25 K, and may be further reduced stepwise at higher temperature differences. The further temperatures did not lead to a change of the amount of current, since the differences, e.g. between T2 and T6 or T3 and T5 did not exceed a threshold. Curves 304 are temperatures at or near the handle of the charge connector.

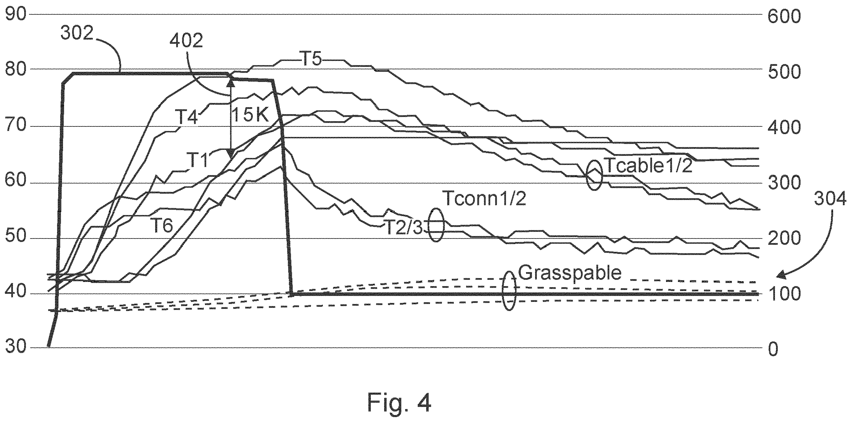

Fig. 4 shows a temperature diagram in a case where a fan of the cooling unit is disconnected. The arrow 402 shows that a temperature difference d_T5T6 between T5 and T6 at the cold side and the hot side of the cooling unit 112 falling below 15 K results in a lower current. A few seconds later, the difference falls below a further threshold resulting in a significant drop of the charge current.

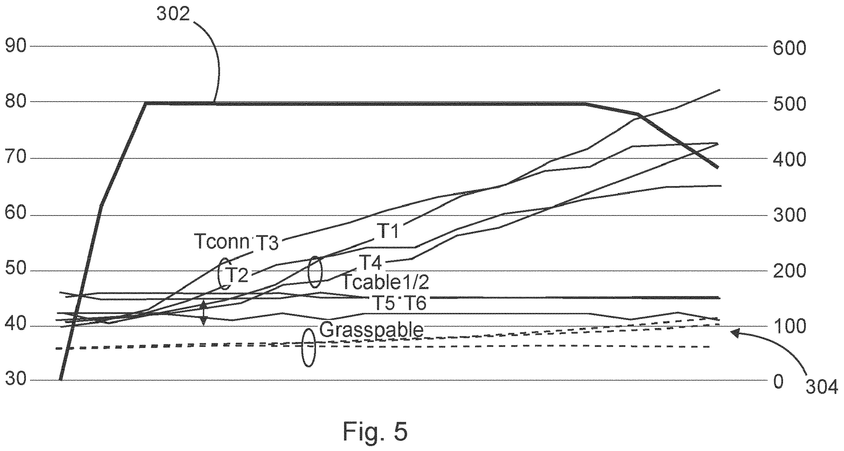

Fig. 5 shows a temperature diagram in a case where the pump of the cooling unit is broken or the flow of the cooling fluid is limited. The shown interval has a range of about 2 minutes. The charge current is reduced when T2 - T6 exceeds the threshold of 20 K. Alternatively or as a logical OR-connection, the difference between T3 - T5 may be used for detecting the failure and reducing the charge current.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### Reference Numerals

- 110: EV charger
- 112: cooling unit
- 114: control unit
- 116: pump
- 120: charge connector
- 122: cold (cooling) tube
- 124: hot (cooling) tube
- 130: charge connector
- T1 ...T6: temperature sensors / location of temperature sensors
- 202: first method step
- 204: second method step
- 302: curve of charge current
- 304: temperature curve of temperatures at or near the handle of the charge connector

## Claims

1. Electric vehicle charging system (100) comprising
an EV charger (110) comprising a current control unit (114);
a charge connector (130);
a charge cable (120) connecting the EV charger (110) with the charge connector (130);
a cooling circuit; and
a plurality of temperature sensors (T1...T6) attached to the cooling circuit at different positions and providing measured temperatures to the control unit (114);
wherein the control unit (114) is configured to control charge current in dependence on temperature differences measured between temperature sensors (T1...T6) of the plurality of temperature sensors (T1 ...T6).

2. Electric vehicle charging system (100) according to claim 1, wherein control unit (114) is configured to control the charge current additionally in dependence on the absolute temperature measured by temperature sensors (T1...T6) of the plurality of temperature sensors (T1...T6).

3. Electric vehicle charging system (100) according to claim 1 or 2, wherein
the cooling circuit is an active closed cooling circuit comprising a cold cooling tube (122) from the EV charger (110) through the charge cable (120) to the charge connector (130) and a hot cooling tube (124) from the charge connector (130) through the charge cable (120) to the EV charger (110);
wherein the hot and the cold cooling tubes are filled with cooling liquid; and
wherein the temperature sensors (T1...T6) are configured to measure the temperature of the cooling liquid or the temperature at the cold cooling tube or hot cooling tube, respectively, at the different parts of the charging system (100).

4. Electric vehicle charging system (100) according to claim 3,
wherein the EV charger (110) further comprises a cooling unit with a pump configured to drive the fluid through the fluid tubes and to cool incoming hot fluid and pump the cooled fluid into the cold cooling tube to the charge connector (130); and wherein the control unit (114) is configured to determine
a temperature difference between a temperature measured at the cold cooling tube at the charge connector (130) and the cold side of the cooling unit; and/or
a temperature difference between a temperature measured at the hot cooling tube at the charge connector (130) and the hot side of the cooling unit; and/or
a temperature difference between a temperature measured at the hot cooling tube at the charge cable (120) and the hot side of the cooling unit; and/or
a temperature difference between a temperature measured at the hot side of the cooling unit and the cold side of the cooling unit.

5. Electric vehicle charging system (100) according to any of the previous claims, Wherein the control unit (114) further determines whether the cooling tube 122 and/or the cooling unit 112 has a defect.

6. Electric vehicle charging system (100) according to claim 5, wherein the control unit (114) provides an interface to communicate that the cooling tube 122 and/or the cooling unit 112 have a defect, if it has determined that they have a defect.

7. Electric vehicle charging system (100) according to any of the previous claims, wherein the electric vehicle charging system (100) comprises additional cooling circuits; and wherein the control unit (114) is configured to control the charge current additionally in dependence on temperature differences measured within these cooling circuits and/or temperature differences measured between the cooling circuits.

8. Electric vehicle charging system (100) according to any of the previous claims, wherein the control unit (114) is configured to determine a trend of the temperatures and the temperature differences and to control the charge current in dependence on the trend.

9. Method for controlling the charging of an electric vehicle in an electric vehicle charging system (100) according to any of claims 1 to 8, comprising the following steps performed by the control unit (114):
determining (202) temperature differences measured between temperature sensors (T1...T6) of the plurality of temperature sensors (T1...T6); and
controlling (204) the charge current in dependence on the determined temperature differences.

10. Control unit (114) for an electric vehicle charging system (100) according to any of claims 1 to 8.

11. Use of temperature sensors (T1...T6) T1...T6 in an electric vehicle charging system (100) according to any of claims 1 to 8 for determining (202) temperature differences measured between temperature sensors (T1...T6) of the plurality of temperature sensors (T1...T6) T1 ...T6, and controlling (204) charge current in dependence on the determined temperature differences.
